# EUROPEAN PATENT APPLICATION

(11) **EP 2 341 182 A1**
(43) Date of publication of application: **06.07.2011**
(21) Application number: 10194814.9
(22) Date of filing: 14.12.2010
(51) Int. Cl.: D06F 58/22

(54) **Filter cleaning device**

(30) Priority: 29.12.2009 KR 20090132327
(71) Applicant: Samsung Electronics Co., Ltd., Suwon-si, Gyeonggi-do 506-762 (KR)
(72) Inventor: Kim, Sin Ae, Gyeonggi-do (KR)
(74) Representative: Grünecker, Kinkeldey, Stockmair & Schwanhäusser Anwaltssozietät

(57) **Abstract**

A filter cleaning device (10) which automatically cleans a filter (20). The filter cleaning device includes a brush unit (30) to collect foreign substances filtered out by a filter member, a processing unit (40) to process the foreign substances collected by the brush unit, and a storage unit (50) to store the foreign substances processed by the processing unit.

## Description

### BACKGROUND

### 1. Field

Embodiments relate to a filter cleaning device which removes foreign substances from a filter using a brush.

### 2. Description of the Related Art

In general, clothes dryers are apparatuses which dry laundry in a wet state using heat or hot air.

In a clothes dryer, a fan circulates air heated by a heater to the inside of a drying drum, and a filter removes foreign substances, such as lint, contained in the air circulated by the fan.

As the clothes dryer is repeatedly used, foreign substances accumulate in the filter, and thus may lower the performance of the filter. Further, the foreign substances reduce the flux of air passing through the filter, and thus may lower the drying performance of the clothes dryer.

Foreign substances in filters of various home appliances including the clothes dryer may cause lowering of the performance of the filters or performance of home appliances.

Therefore, a user replaces a filter used for a long time with a new one or separates the filter and cleans the filter so as to assure the performance of the filter and to assure the flux of air passing through the filter, thereby improving the drying performance of the clothes dryer.

### SUMMARY

Therefore, it is an aspect to provide a filter cleaning device which automatically cleans a filter.

Additional aspects will be set forth in part in the description which follows and, in part, will be apparent from the description, or may be learned by practice of the invention.

In accordance with one aspect, a filter cleaning device includes a filter member, a brush unit to collect foreign substances filtered out by the filter member, a processing unit to process the foreign substances collected by the brush unit, and a storage unit to store the foreign substances processed by the processing unit.

The brush unit may include a brush part to clean the filter member, a guide part to guide the brush part in the vertical direction, and a first driving part to move the brush part in connection with the guide part.

The first driving part may include a first driving roller connected with the guide part, and a first motor to provide driving force to the first driving roller.

The processing unit may include a pressure part to compress the foreign substances collected by the brush unit, and a second driving part to drive the pressure part.

The pressure part may include a first pressure roller and a second pressure roller facing each other, and the second driving part may include a second driving roller connected with one of the first pressure roller and the second pressure roller, and a second motor to provide driving force to the second driving roller.

The storage unit may include a dust box to store the foreign substances processed by the processing unit, and a cover to open and close the dust box.

The cover may be opened and closed by the second driving part.

The cover may include a second gear part to receive driving force transmitted from the second driving roller, and an idle rotation induction part to induce idle rotation of the second driving roller, and the filter cleaning device may further include first springs to elastically support the cover such that the second gear part of the cover is engaged with the second driving roller.

The filter cleaning device may further include a separation unit to separate the foreign substances, collected by the brush unit, from the brush unit.

The separation unit may include a guide housing, a separation part provided so as to slidably move in a first guide housing of the guide housing, second springs to elastically support the separation part in the first guide housing, stoppers provided so as to slidably move in a second guide housing of the guide housing, and third springs to elastically support the stoppers in the second guide housing.

The separation part may include stepped parts in which the stoppers are seated or from which the stoppers are separated such that the separation part is restricted by the stoppers or the restriction of the separation part by the stoppers is released.

The brush unit may include a brush part to apply pressure to the stoppers so as to separate the stoppers from the stepped parts.

The storage unit may include a cover to apply pressure to the separation part so as to seat the stoppers in the stepped parts.

In accordance with a further aspect, a home appliance includes the filter cleaning device.

In accordance with another aspect, a method of cleaning a filter member includes collecting foreign substances filtered out by the filter member, processing the collected foreign substances, and storing the processed foreign substances.

In the processing of the collected foreign substances, the collected foreign substances may be compressed by rollers.

### BRIEF DESCRIPTION OF THE DRAWINGS

These and/or other aspects will become apparent and more readily appreciated from the following description of the embodiments, taken in conjunction with the accompanying drawings of which:
FIG. 1 is a perspective view schematically illustrating a filter cleaning device in accordance with one embodiment;
FIG. 2 is a longitudinal-sectional view schematically illustrating the filter cleaning device in accordance with the embodiment;
FIG. 3 is a perspective view illustrating a filter member in accordance with the embodiment;
FIG. 4 is a perspective view illustrating a brush unit in accordance with the embodiment;
FIG. 5 is a perspective view illustrating a processing unit and a storage unit in accordance with the embodiment;
FIG. 6 is a perspective view illustrating a separation unit in accordance with the embodiment;
FIG. 7 is a view illustrating a cover in accordance with the embodiment, which is partially opened;
FIG. 8 is a view illustrating the cover in accordance with the embodiment, which is completely opened;
FIG. 9 is a view illustrating a comb in accordance with the embodiment, restriction of which is released;
FIG. 10 is a view illustrating the brush unit in accordance with the embodiment, from which foreign substances are removed and then are processed; and
FIG. 11 is a view illustrating the cover in accordance with the embodiment, which is closed.

### DETAILED DESCRIPTION

Reference will now be made in detail to the embodiments, examples of which are illustrated in the accompanying drawings, wherein like reference numerals refer to the like elements throughout.

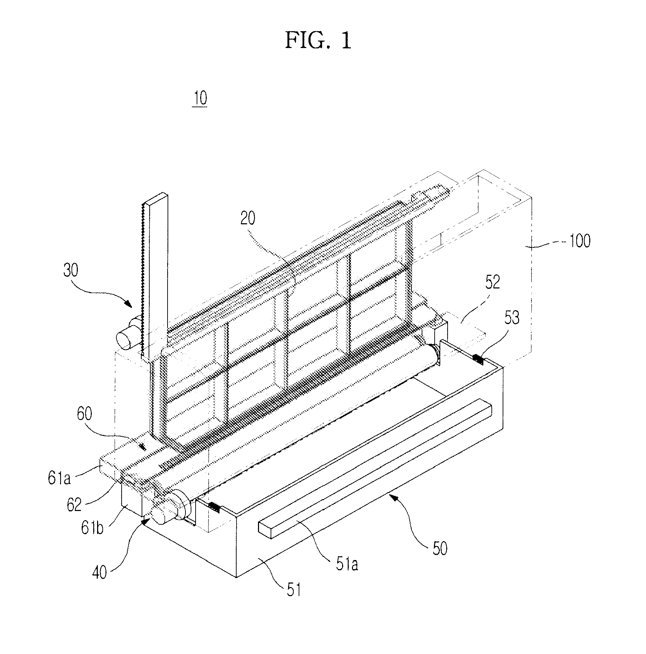

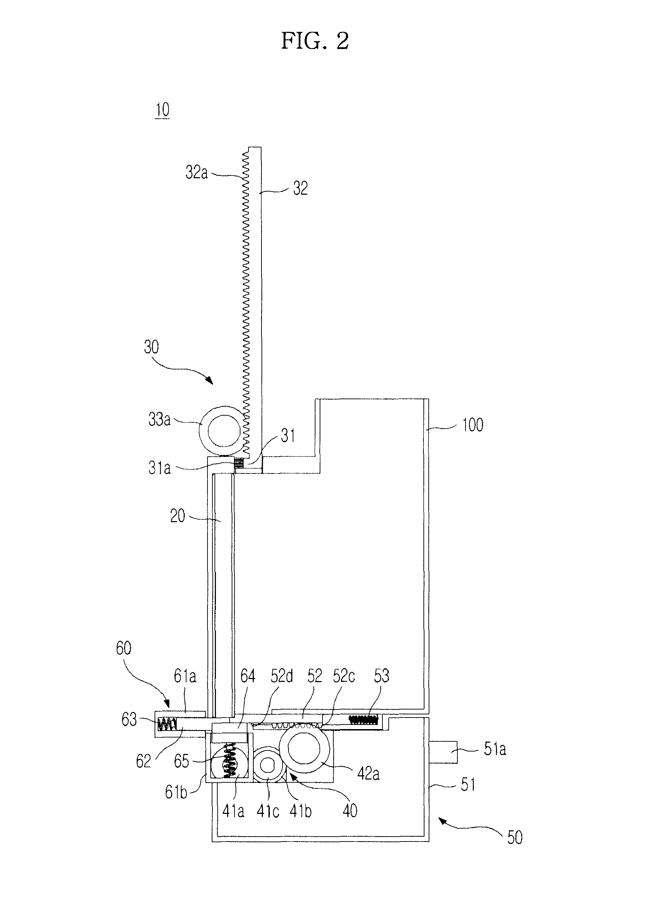

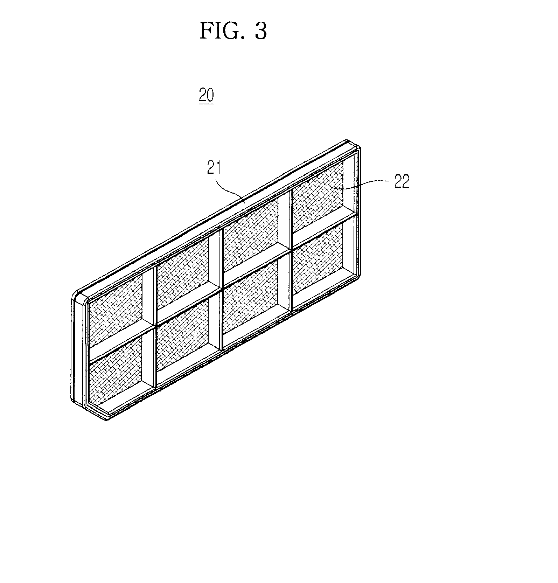

FIG. 1 is a perspective view schematically illustrating a filter cleaning device in accordance with one embodiment, FIG. 2 is a longitudinal-sectional view schematically illustrating the filter cleaning device in accordance with the embodiment, and FIG. 3 is a perspective view illustrating a filter member in accordance with the embodiment.

As shown in FIGS. 1 to 3, a home appliance may include a duct in which air flows. For example, a clothes dryer may include a circulation duct in which hot air is circulated, and an air conditioner may include a suction duct into which external air is introduced and a discharge duct from which heat-exchanged air is discharged to the outside. Further, a washing machine, a dish washer, a cooking appliance, and a refrigerator may have ducts having various shapes.

A filter member 20 is installed in the duct 100 of the home appliance. The filter member 20 includes a filter frame 21 formed in a lattice shape, and a filter 22 fixed to the lattice-shaped filter frame 21.

The filter member 20 filters out foreign substances, such as lint, contained in air flowing in the duct 100. Foreign substances gradually accumulate on the filter member 20, and thus may cause lowering of air pressure. In order to prevent this problem, a user replaces the filter member 20 with a new one, or cleans the filter member 20.

The filter member 20 is detachably provided in the duct 100. If the user intends to replace the filter member 20 with a new one, the user separates the filter member 20 from the duct 100 and then reconnects a new filter member to the duct 100.

A filter cleaning device 10 automatically cleans the filter member 20. The filter cleaning device 10 removes the foreign substances from the filter member 20, thus assuring the performance of the filter member 20.

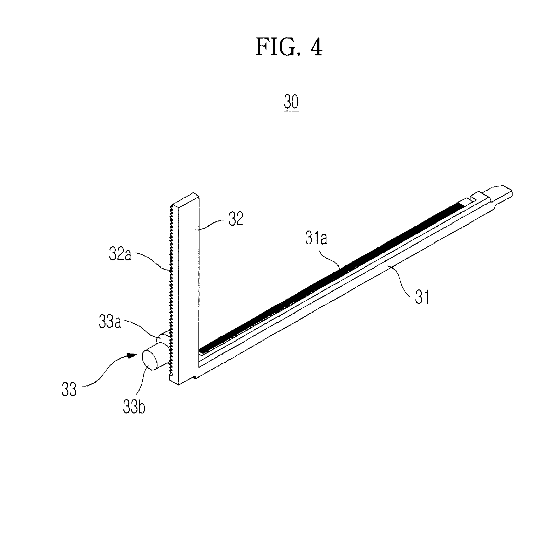

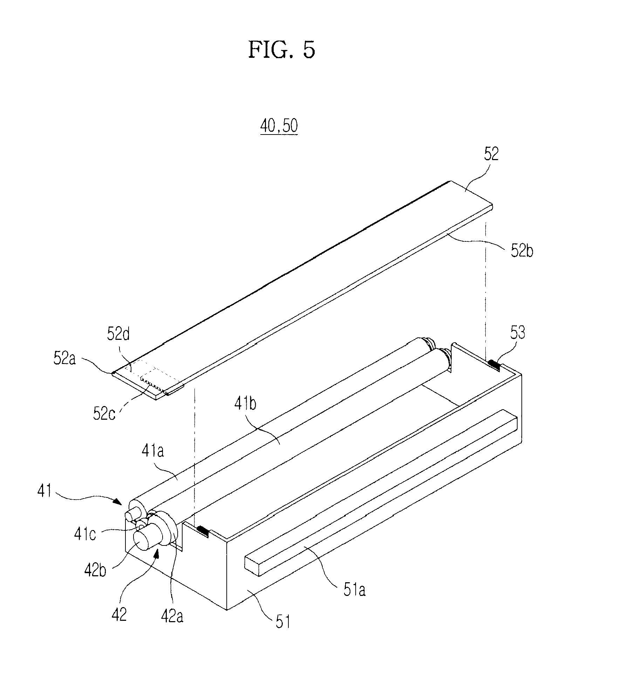

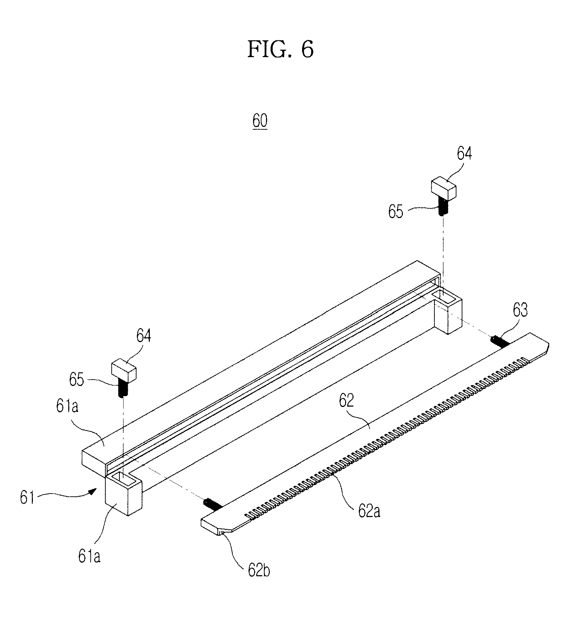

FIG. 4 is a perspective view illustrating a brush unit in accordance with the embodiment, FIG. 5 is a perspective view illustrating a processing unit and a storage unit in accordance with the embodiment, and FIG. 6 is a perspective view illustrating a separation unit in accordance with the embodiment.

As shown in FIGS. 1 to 6, the filter cleaning device 10 includes a brush unit 30, a processing unit 40, a storage unit 50, and a separation unit 60.

The brush unit 30 includes a brush part 31, a guide part 32, and a first driving part 33.

The brush part 31 sweeps foreign substances off the filter member 20. The brush part 31 includes a brush 31 a contacting the filter member 20, and the brush 31 a of the brush part 31 sweeps the foreign substances off the filter member 20.

The guide part 32 is connected to the first driving part 33, and receives driving force transmitted from the first driving part 33. The guide part 32 includes a first gear part 32a so as to receive the driving force transmitted from the first driving part 33. Further, the guide part 32 is configured such that the brush unit 30 is guided in the vertical direction.

The first driving part 33 includes a first driving roller 33a engaged with the first gear part 32a of the guide part 32, and a first motor 33b to provide driving force to the first driving roller 33a. The first driving roller 33a is rotated in a regular direction (or the clockwise direction) or in a reverse direction (or the counterclockwise direction) by the first motor 33b, and the brush part 31 is reciprocated in the vertical direction by the guide part 32 connected to the first driving roller 33a. The brush unit 30 sweeps down the foreign substances off the filter member 20 such that the foreign substances removed from the filter member 20 are collected in a region under the filter member 20.

The processing unit 40 processes the foreign substances swept by the brush unit 30. That is, the brush unit 30 collects the foreign substances of the filter member 20 in the region under the filter member 20, and the processing unit 40 compresses the foreign substances collected by the brush unit 30.

The processing unit 40 includes a pressure part 41 to compress the foreign substances, and a second driving part 42 to drive the pressure part 41.

The pressure part 41 includes a first pressure roller 41 a and a second pressure roller 41 b. The first pressure roller 41 a and the second pressure roller 41 b are rotatably connected above a dust box 51. The first pressure roller 41 a and the second pressure roller 41 b face each other so as to form a designated nip. The foreign substances pass through a gap between the first pressure roller 41 a and the second pressure roller 41 b, thus being compressed.

The second driving part 42 includes a second driving roller 42a, and a second motor 42b to provide driving force to the second driving roller 42a. The second driving roller 42a is rotated in a regular direction (or the clockwise direction) or in a reverse direction (or the counterclockwise direction) by the second motor 42b.

The second pressure roller 41 b includes a one-way clutch gear 41 c connected to the second driving roller 42a. If the second driving roller 42a is rotated in the regular direction by the one-way clutch gear 41 c, the second pressure roller 41 b may be rotated in the reverse direction, and if the second driving roller 42a is rotated in the reverse direction, the second pressure roller 41 b may not be rotated.

The storage unit 50 stores the foreign substances processed by the processing unit 40. As the foreign substances pass through the processing unit 40, volume of the foreign substances is reduced, and thus a large amount of the foreign substances is stored in the storage unit 50.

The storage unit 50 includes the dust box 51, the upper surface of which is opened, and a cover 52 to open and close the opened upper surface of the dust box 51.

The dust box 51 may be detachably provided. A user separates the dust box 51 from the main body of the home appliance using a handle 51 a so as to remove the foreign substances stored in the dust box 51, and then reconnects the dust box 51 to the main body after the removal of the foreign substances.

The cover 52 may be installed on the dust box 51 such that the cover 52 slidably moves. A rear end 52b of the cover 52 is elastically supported by first springs 53.

The cover 52 is opened and closed by the second driving roller 42a. The cover 52 includes a second gear part 52c to receive driving force transmitted from the second driving roller 42a, and an idle rotation induction part 52d to induce idle rotation of the second driving roller 42a. If the second gear part 52c of the cover 52 is connected with the second driving roller 42a, the driving force of the second driving roller 42a is transmitted to the cover 52 and thus the cover 52 slides, and if the idle rotation induction part 52d of the cover 52 is connected with the second driving roller 42a, the driving force of the second driving roller 42a is not transmitted to the cover 52 and thus the cover 52 stays in place.

The separation unit 60 separates the foreign substances, collected by the brush unit 30, from the brush unit 30.

The separation unit 60 includes a guide housing 61, a separation part 62, second springs 63, stoppers 64, and third springs 65.

The guide housing 61 includes a first guide housing 61 a to house the separation part 62 such that the separation part 62 may slidably move, and a second guide housing 61 b to house the stoppers 64 such that the stoppers 64 may slidably move.

The separation part 62 includes a comb 62a disposed at the center of the separation part 62 in the length direction, and stepped parts 62b disposed at both ends of the comb 62a.

The separation part 62 is inserted into the first guide housing 61a, and is elastically supported by the second springs 63. The separation part 62 is protruded above the brush 31 a of the brush part 31 by the elastic force of the second springs 63.

The stoppers 64 are disposed at both ends of the separation part 62 so as to correspond to the stepped parts 62b of the separation part 62. The stoppers 64 are inserted into the second guide housing 61 b, and are elastically supported by the third springs 65. The stoppers 64 are disposed in front of the stepped parts 62b of the separation part 62 by the elastic force of the third springs 65.

The separation part 62 is restricted or the restriction thereof is released by the stoppers 64. If the stoppers 64 are inserted into the stepped parts 62b of the separation part 62, the separation part 62 is in a restriction state, and if the stoppers 64 are separated from the stepped parts 62b of the separation part 62, the restriction of the comb 62a of the separation part 62 is released. If the restriction of the separation part 62 is released, the separation part 62 is protruded from the first guide housing 61 a by the elastic force of the second springs 63. A front end 52a of the cover 52 applies pressure to the comb 62a in a direction of compressing the second springs 63, and inserts the comb 62a into the first guide housing 61 a.

Hereinafter, an operation of the filter cleaning device in accordance with the embodiment will be described in detail with reference to the accompanying drawings.

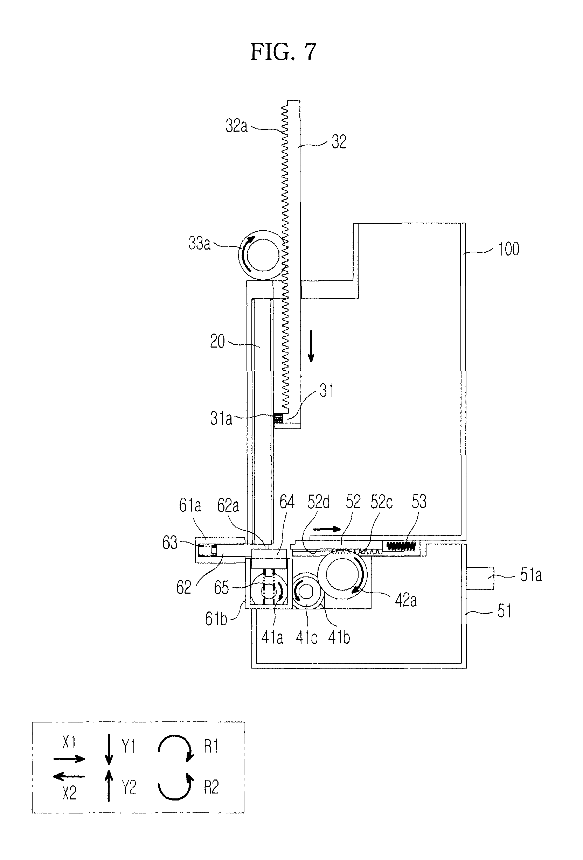

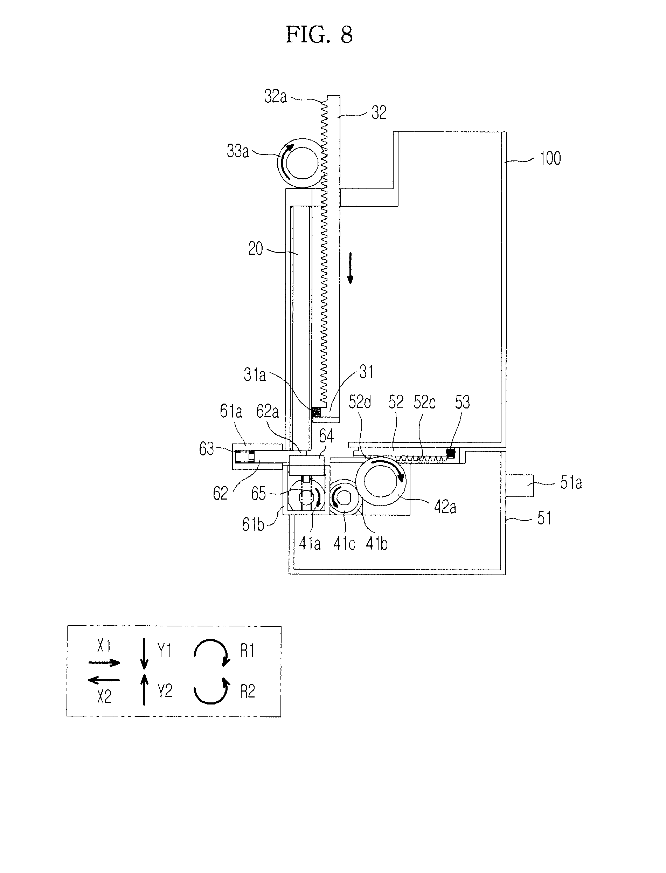

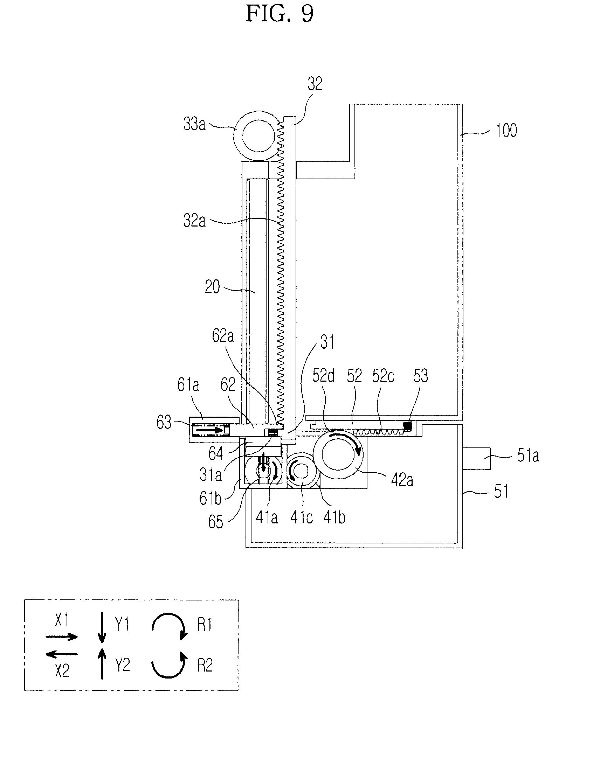

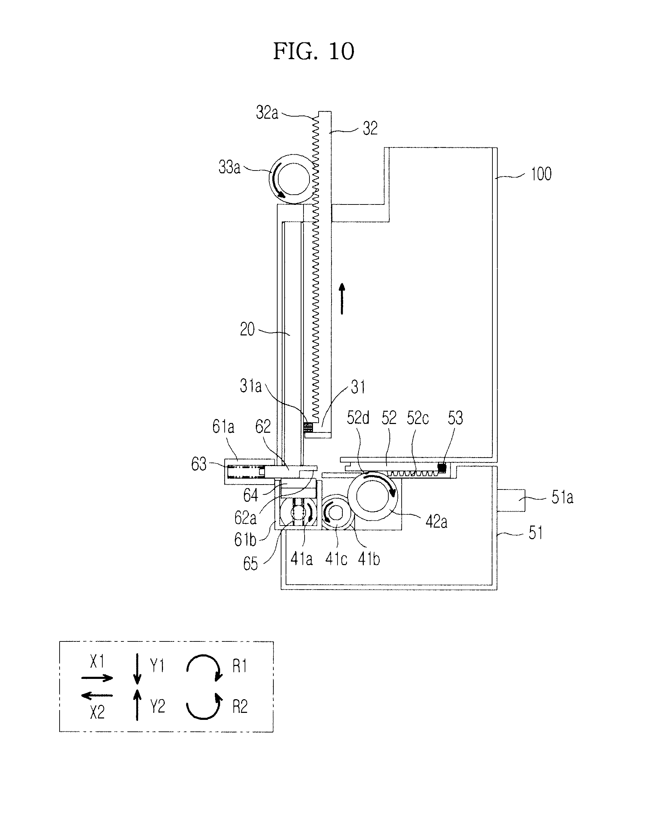

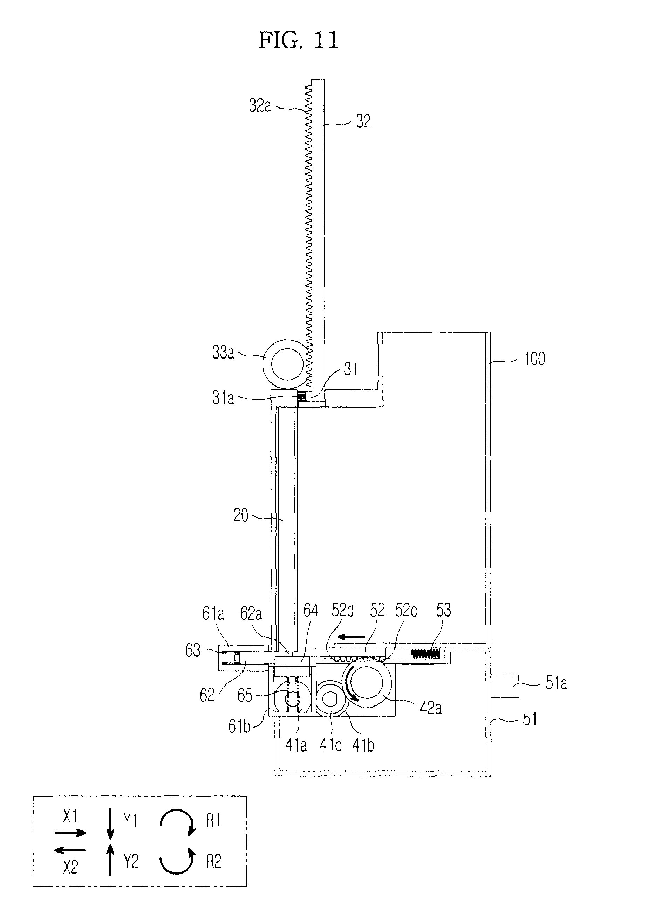

FIG. 7 is a view illustrating the cover in accordance with the embodiment, which is partially opened, FIG. 8 is a view illustrating the cover in accordance with the embodiment, which is completely opened, FIG. 9 is a view illustrating the comb in accordance with the embodiment, restriction of which is released, FIG. 10 is a view illustrating the brush unit in accordance with the embodiment, from which foreign substances are removed and then are processed, and FIG. 11 is a view illustrating the cover in accordance with the embodiment of the present invention, which is closed.

As shown in FIGS. 7 to 11, for convenience of illustration, directions are defined as X1, X2, Y1, Y2, R1, and R2. Here, X represents translational movement in leftward and rightward directions, and specifically, X1 represents movement in the rightward direction and X2 represents movement in the leftward direction. Y represents translational movement in upward and downward directions, and specifically, Y1 represents movement in the downward direction and Y2 represents movement in the upward direction. R represents rotary movement, and specifically, R1 represents rotation in the clockwise direction and R2 represents rotation in the counterclockwise direction.

First, the cover 52 is partially opened, as shown in FIG. 7. At this time, the second driving roller 42a is connected with the second gear part 52c of the cover 52, and thus when the second driving roller 42a is rotated in the direction R1, the cover 52 moves in the direction X1. Here, the first springs 53 supported at the rear end 52b of the cover 52 are compressed in the direction X1.

Thereafter, the cover 52 is completely opened, as shown in FIG. 8. At this time, the second driving roller 42a is connected with the idle rotation induction part 52d of the cover 52, and thus the second driving roller 42a is rotated idly and the cover 52 stays in place. Consequently, the second driving roller 42a is continuously rotated in the direction R1 under the condition that the cover 52 is completely opened.

Here, the brush unit 30 collects foreign substances of the filter member 20. As the first driving roller 33a is rotated in the direction R1, as shown in FIGS. 7 and 8, the brush part 31 moves in the direction Y1. When the brush part 31 moves in the direction Y1, the brush 31a sweeps the foreign substances off the filter member 20. Therefore, the brush unit 30 causes the foreign substances of the filter member 20 to be collected at a region under the filter member 20.

Thereafter, when the brush part 31 continuously descends in the direction Y1, the brush part 31 applies pressure to the stoppers 64. The stoppers 64 move in the direction Y1, and the third springs 65 are compressed, as shown in FIG. 9. At this time, the stoppers 64 are separated from the stepped parts 62b of the separation part 62, thus releasing restriction of the separation part 62. Consequently, the separation part 62 is slid in the direction X1 by the elastic force of the second springs 63, and is located at a position higher than the brush 31 a of the brush part 31.

Thereafter, when the first driving roller 33a is rotated in the direction R2, as shown in FIG. 10, the brush part 31 moves in the direction Y2. When the brush part 31 moves in the direction Y2, the brush 31 a passes through the comb 62a of the separation part 62. As the brush 31 a passes through the comb 62a, the comb 62a separates the foreign substances, collected by the brush 31 a, from the brush 31 a. Thereafter, the foreign substances of the filter member 20 descend through a gap between the first pressure roller 41 a and the second pressure roller 41 b.

Here, the second driving roller 42a is rotated in the direction R1, and thus the first pressure roller 41 a is rotated in the direction R1 and the second pressure roller 41 b is rotated in the direction R2. The foreign substances separated from the brush 31 a by the comb 62a pass through the gap between the first pressure roller 41 a and the second pressure roller 41 b, thus being compressed and collected in the dust box 51.

Thereafter, when the second driving roller 42a is rotated in the direction R2, as shown in FIG. 11, the cover 52 moves in the direction X2 by the elastic force of the first springs 53. At this time, the second gear part 52c of the cover 52 is connected with the second driving roller 42a, and thus the cover 52 moves in the direction X2. As the cover 52 continuously moves in the direction X2, the front end 52a of the cover 52 applies pressure to the separation part 62, and thus the separation part 62 moves in the direction X2. Then, the second springs 63 are compressed.

Here, the stoppers 64 are protruded in the direction Y2 by the elastic restoring force of the third springs 65, and are seated in the stepped parts 62b of the separation part 62. Thereby, the stoppers 64 restrict the separation part 62 again.

On the other hand, since the second pressure roller 41 b is connected with the second driving roller 42a by the one-way clutch gear 41 c, the second pressure roller 41 b is not rotated even when the second driving roller 42a is rotated in the direction R2. Therefore, the first pressure roller 41 a and the second pressure roller 41 b are stayed in the stopped state.

The first driving roller 33a is continuously rotated in the direction R2, and moves the brush part 31 in the direction Y2. Thereafter, the brush part 31 is restored its original position.

Such a filter cleaning device 10 repeatedly performs the above-described operation.

As is apparent from the above description, a filter cleaning device in accordance with one embodiment of the present invention may uniformly maintain the performance of home appliances including a clothes dryer.

Further, the filter cleaning device may solve inconvenience in maintenance, such as separation of a filter to clean the filter.

Although a few embodiments have been shown and described, it would be appreciated by those skilled in the art that changes may be made in these embodiments without departing from the principles and spirit of the invention, the scope of which is defined in the claims and their equivalents.

## Claims

1. A filter cleaning device comprising:
a filter member;
a brush unit to collect foreign substances filtered out by the filter member;
a processing unit to process the foreign substances collected by the brush unit; and
a storage unit to store the foreign substances processed by the processing unit.

2. The filter cleaning device according to claim 1, wherein the brush unit includes a brush part to clean the filter member, a guide part to guide the brush part in the vertical direction, and a first driving part to move the brush part in connection with the guide part.

3. The filter cleaning device according to claim 2, wherein the first driving part includes a first driving roller connected with the guide part, and a first motor to provide driving force to the first driving roller.

4. The filter cleaning device according to claim 1, wherein the processing unit includes a pressure part to compress the foreign substances collected by the brush unit, and a second driving part to drive the pressure part.

5. The filter cleaning device according to claim 4, wherein:
the pressure part includes a first pressure roller and a second pressure roller facing each other; and
the second driving part includes a second driving roller connected with one of the first pressure roller and the second pressure roller, and a second motor to provide driving force to the second driving roller.

6. The filter cleaning device according to claim 5, wherein the storage unit includes a dust box to store the foreign substances processed by the processing unit, and a cover to open and close the dust box.

7. The filter cleaning device according to claim 6, wherein the cover is opened and closed by the second driving part.

8. The filter cleaning device according to claim 7, wherein the cover includes a second gear part to receive driving force transmitted from the second driving roller, and an idle rotation induction part to induce idle rotation of the second driving roller; and
further comprising first springs to elastically support the cover such that the second gear part of the cover is engaged with the second driving roller.

9. The filter cleaning device according to claim 1, further comprising a separation unit to separate the foreign substances, collected by the brush unit, from the brush unit.

10. The filter cleaning device according to claim 9, wherein the separation unit includes a guide housing, a separation part provided so as to slidably move in a first guide housing of the guide housing, second springs to elastically support the separation part in the first guide housing, stoppers provided so as to slidably move in a second guide housing of the guide housing, and third springs to elastically support the stoppers in the second guide housing.

11. The filter cleaning device according to claim 10, wherein the separation part includes stepped parts in which the stoppers are seated or from which the stoppers are separated such that the separation part is restricted by the stoppers or the restriction of the separation part by the stoppers is released.

12. The filter cleaning device according to claim 10, wherein the brush unit includes a brush part to apply pressure to the stoppers so as to separate the stoppers from the stepped parts.

13. The filter cleaning device according to claim 10, wherein the storage unit includes a cover to apply pressure to the separation part so as to seat the stoppers in the stepped parts.

14. A home appliance comprising the filter cleaning device according to claim 1.

15. A method of cleaning a filter member comprising:
collecting foreign substances filtered out by the filter member;
processing the collected foreign substances; and
storing the processed foreign substances.
